Europäisches Patentamt

(19) European Patent Office

Office européen des brevets

(11) Publication number: **0 012 553**
B1

# (12) EUROPEAN PATENT SPECIFICATION

(45) Date of publication of patent specification: **19.05.82**

(21) Application number: **79302764.0**

(22) Date of filing: **03.12.79**

(51) Int. Cl.³: **B 23 C 1/12,** B 23 Q 3/157, B 23 B 39/02

(54) Vertical spindle machine tool with tiltable spindle and tiltable automatic tool changer.

(30) Priority: **06.12.78 US 966906**

(43) Date of publication of application:
**25.06.80 Bulletin 80/13**

(45) Publication of the grant of the patent:
**19.05.82 Bulletin 82/20**

(84) Designated Contracting States:
**BE CH DE FR GB IT NL SE**

(56) References cited:
DE - A1 - 2 524 967
US - A - 3 344 512
US - A - 3 650 178
US - A - 3 990 585

MACHINERY AND PRODUCTION
ENGINEERING, Vol. 130, 2 February 1977,
London
"Tokyo machine tool exhibition", page 108

(73) Proprietor: **KEARNEY & TRECKER CORPORATION**
**11000 Theodore Trecker Way**
**Milwaukee, Wisconsin 53214 (US)**

(72) Inventor: **Kielma, Ervin I.**
**2536 South 64th Street**
**West Allis, Wisconsin (US)**

(74) Representative: **Baillie, Iain Cameron et al,**
**c/o Ladas & Parry Isartorplatz 5**
**D-8000 München 2 (DE)**

Courier Press, Leamington Spa, England.

Vertical spindle machine tool with tiltable spindle and tiltable automatic tool changer.

This invention relates to vertical spindle machine tools in which the spindle is tiltable and in which an automatic tool changer is employed. In the past, the automatic tool changer of such machine tools was mounted in a stationary position with respect to the tiltable spindle, which required that the spindle be returned to its vertical position before a tool change could be effected.

Prior art machine tools are best exemplified by the disclosures in United States Patents Nos. 3344512 and 3990585. U.S. Patent 3344512 merely discloses a machine tool in which an operating spindle can be moved in horizontal and vertical directions. Provision is made for selectively supplying the spindle with a tool from a magazine which supports a plurality of tools with their longitudinal axes lying substantially at right angles to the longitudinal axis of the spindle. The specification of U.S. patent 3344512 describes a complex system involving a cam or guide track and roller and also rack and pinion means for re-orienting a tool to a position in which it may be engaged by the spindle. U.S. Patent 3344512 not only makes no provision for tilting of the spindle and tool but, moreover, employs a complicated mechanism for supplying tools to the work spindle.

U.S. Patent 3990585 is more relevant in that it is concerned with a spindle head which, in addition to being moveable in horizontal and vertical directions, is pivotable about a substantially horizontal axis. However, the exchange mechanism utilised in the machine tool of U.S. Patent 3990585 incorporates a magazine supported by the tool frame and remote from the spindle head. Thus the spindle head pivots independently of the magazine and it is only possible to exchange a tool when the spindle head is in a certain position of pivot. Moreover, the plurality of tools carried by the magazine are, like those in U.S. Patent 3344512, supported with their longitudinal axes oriented substantially at right angles to the longitudinal working axis of the spindle head. In the case of U.S. Patent 3990585 a tool exchange mechanism must be provided to exchange the tools. The mechanism disclosed is a complex structure and comprises two separate arms each supported by a body which is rotatable about its longitudinal axis and which by a power train is operable to rotate the arms to engage and re-orient a tool from the magazine to a position in which it may be engaged by the spindle head.

The machine tool of the present invention provides a substantial improvement over these prior machine tools.

According to the present invention there is provided a machine tool including a frame, a spindle carrier supported by said frame and displaceable thereby in substantially horizontal and vertical planes, a spindle head carried by said spindle carrier and arranged to rotate a spindle in said substantially vertical plane, means for tilting said spindle head to pivot about a substantially horizontal axis, a tool storage magazine arranged selectively to present tool holders for transfer to said spindle, and means for transferring a tool holder from said magazine to said spindle, characterized in that the tool storage magazine is mounted for common pivotal movement with the spindle head, in that said magazine is operable to present a toolholder to a position in which the longitudinal axis of the tool holder lies substantially parallel to the spindle axis and in that the transfer means is also mounted for common pivotal movement with the magazine and the spindle head whereby for all pivot positions of the spindle head transfer of the toolholder from said transfer position to the spindle head is effected by rotation of said transfer means about an axis extending substantially parallel to the axis of said toolholder and spindle.

Other features and advantages of the invention will be apparent from the detailed description herein:

In the drawings:

Fig. 1 is a plan view of a preferred embodiment of the invention;

Fig. 2 is a side elevational view taken on the line 2—2 of Fig. 1 showing the spindle and automatic tool changer in their vertical position;

Fig. 3 is a side elevational view similar to Fig. 2 showing the spindle and automatic tool changer in their tilted position; and

Fig. 4 is a front elevational view taken on the line 4—4 of Fig. 1.

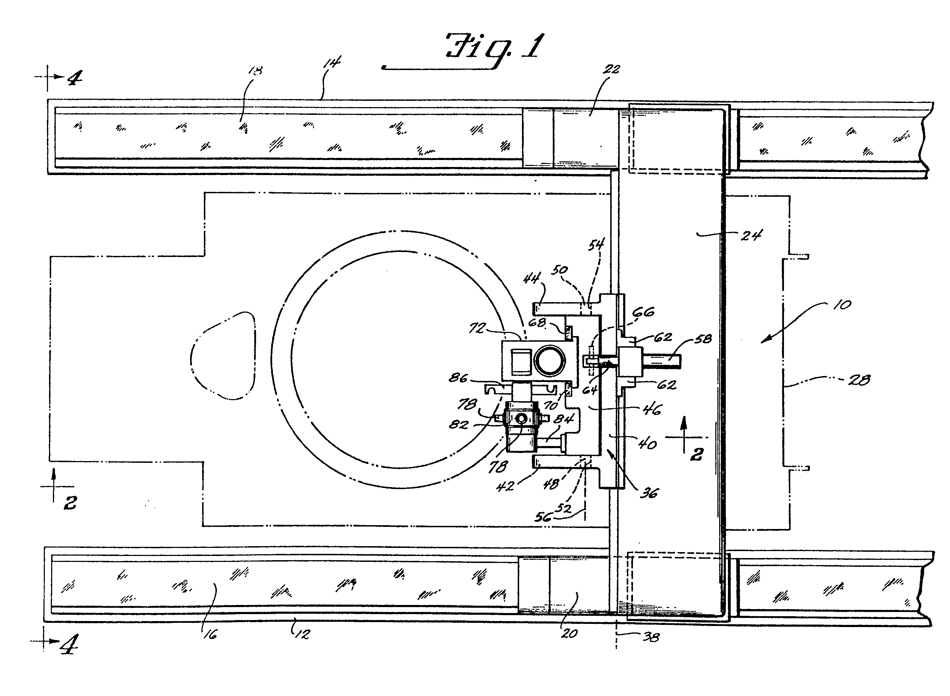

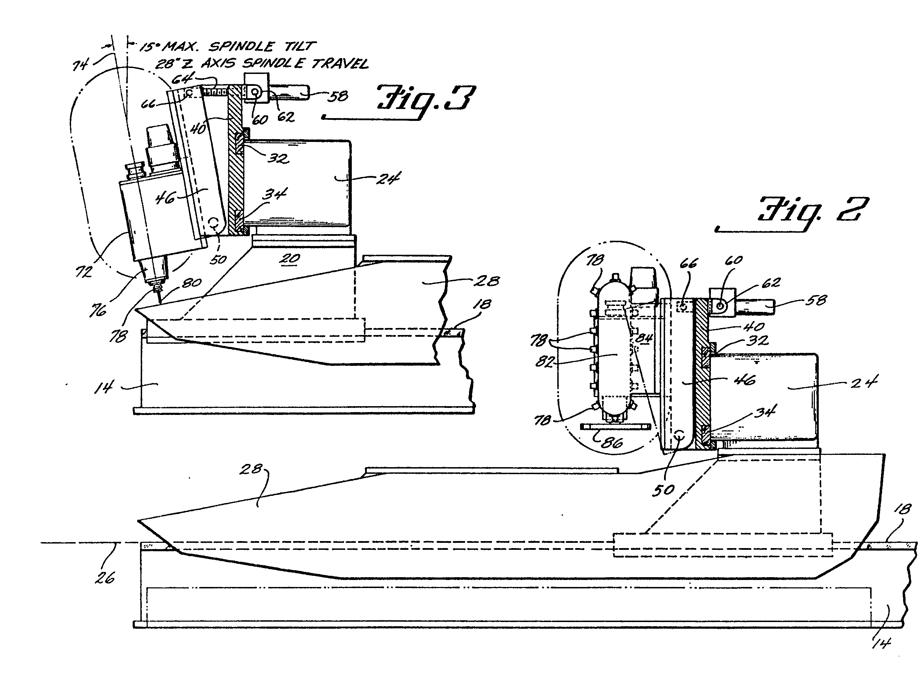

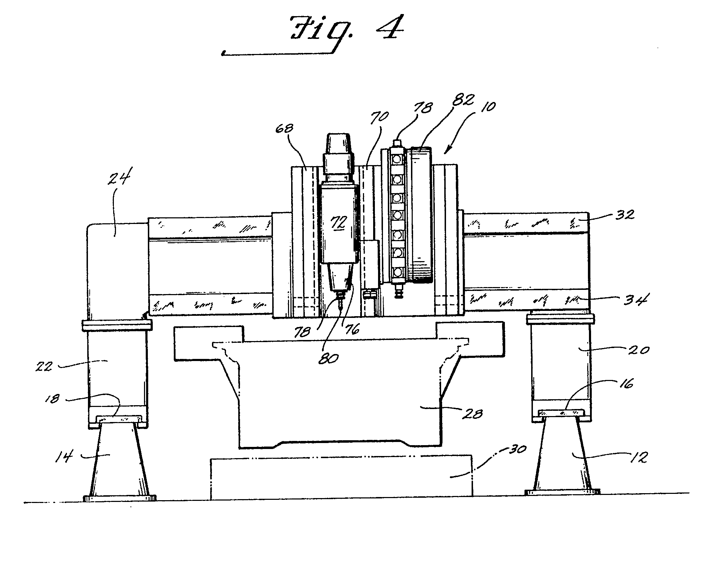

The drawings show one preferred embodiment of the invention in combination with a gantry type vertical spindle machining center 10 (Fig. 1). Machining center 10 is supported by two elongated bed portions 12 and 14 which are arranged in spaced parallel relationship. A pair of horizontal ways 16 and 18 are mounted on top of bed portions 12 and 14 and slidably support gantry shoes 20 and 22 which, in turn, support a gantry bridge 24. Gantry bridge 24 extends between bed portions 12 and 14 and is slidable along a horizontal X axis 26 (Fig. 2) between a rearward position shown in Fig. 2 and a forward position shown in Fig. 3. Gantry bridge 24 and gantry shoes 20 and 22 are driven along X axis 26 by conventional drive means (not shown). Gantry bridge 24 spans the workpiece which in this example is a tank hull 28 (Fig. 2) supported by a conventional fixture 30 (Fig. 4) between bed portions 12 and 14.

A pair of horizontal ways 32 and 34 are mounted on gantry bridge 24 and slidably support a saddle 36 (Fig. 1) which is slidable along a horizontal Y axis 38 by means of a conventional Y axis drive (not shown). Saddle 36 has a base plate 40 and two side plates 42 and 44 (Fig. 1) which project at right angles from base plate 40 and are spaced apart from each other. Saddle base plate 40 and side plates 42 and 44 are U-shaped in plan configuration.

A spindle base 46 is pivotally mounted on saddle 36 by trunnions 48 and 50 which engage matching openings 52 and 54 in saddle side plates 42 and 44. Spindle base 46 is rockable about a horizontal axis 56 which is parallel to Y axis 38. Trunnions 48 and 50 are located at the bottom of spindle base 46 as best shown in Fig. 2. The angular position of spindle base 46 is controlled by an electric motor 58 which is pivotally mounted on saddle base plate 40 and is coupled to the top of spindle base 46 (Fig. 1) by a conventional ball screw mechanism (not shown). Motor 58 is pivotally mounted on saddle base plate 40 by trunnions 60 (Fig. 2) which engage openings in brackets 62 attached to saddle base plate 40. The shaft 64 (Fig. 1) of the ball screw mechanism which is driven by motor 58 is pivotally attached to a pivot pin 66 (Fig. 2) at the top of spindle base 46.

Spindle base 46 supports a pair of vertical ways 68 and 70 (Fig. 1) upon which a spindle head 72 is slidably mounted for movement along a Z axis (Fig. 3) which tilts from the vertical in response to rocking motion of spindle base 46 about axis 56 (Fig. 1). A spindle 76 (Fig. 3) is rotatably mounted on spindle head 72 for rotation about axis 74. Spindle 76 is driven by conventional drive means (not shown) and is adapted to receive a toolholder 78 carrying a tool 80 for performing work on workpiece 28.

A conventional tool storage magazine 82 (Fig. 1) is mounted on spindle base 46 by bracket 84 in a position adjacent to spindle 76. Tool storage magazine 82 is adapted to receive and to store a plurality of toolholders 78 (Fig. 2). A tool changer arm 86 (Fig. 1) is mounted on tool storage magazine 82 to transfer toolholders 78 from tool storage magazine 82 to spindle 76 or vice versa. When spindle base 46 is rocked about axis 56 to tilt Z axis 74 (Fig. 2), tool storage magazine 82 (Fig. 1) and tool changer arm 86 tilt by the same angle since they are also mounted on spindle base 46. This enables tool changer arm 86 to transfer toolholders between tool storage magazine 82 and spindle 76 (Fig. 3) at any tilt angle of Z axis 74.

In this particular embodiment of the invention, Z axis 74 can be tilted up to 15 degrees from the vertical, but it will be obvious that larger or smaller maximum tilt angles can be employed with the above-described tilt structure. Tilt motor 58, which determines the degree of tilt, is controlled by conventional motor control circuitry (not shown) and can be energized to achieve any desired tilt angle between the vertical (Fig. 2) and the maximum tilt angle (Fig. 3) in response to appropriate control signals.

Although this particular embodiment is used in combination with a gantry type vertical spindle machining center, the invention is applicable to any vertical spindle machine tool. In this embodiment, saddle 36 acts as a frame upon which the tiltable components are pivotally mounted, but in other embodiments, the tiltable components may be pivotally mounted on an upright.

Although the illustrative embodiment of the invention has been described in considerable detail for the purpose of fully disclosing a practical operative structure incorporating the invention, it is to be understood that the particular apparatus shown and described is intended to be illustrative only and that the various novel features of the invention may be incorporated in other structural forms.

## Claims

1. A machine tool including a frame (20, 22, 24, 40), a spindle carrier supported by said frame and displaceable thereby in substantially horizontal and vertical planes, a spindle head (72) carried by said spindle carrier and arranged to rotate a spindle (76) in said substantially vertical plane, means for tilting said spindle head (72) to pivot about a substantially horizontal axis, a tool storage magazine (82) arranged selectively to present tool holders (78) for transfer to said spindle (76), and means (86) for transferring a tool holder (78) from said magazine (82) to said spindle (76), characterized in that the tool storage magazine (82) is mounted for common pivotal movement with the spindle head (72), in that said magazine (82) is operable to present a toolholder (78) to a position in which the longitudinal axis of the tool holder lies substantially parallel to the spindle axis (76) and in that the transfer means (86) is also mounted for common pivotal movement with the magazine (82) and the spindle head (72) whereby for all pivot positions of the spindle head (72) transfer of the toolholder from said transfer position to the spindle head is effected by rotation of said transfer means about an axis extending substantially parallel to the axis of said toolholder and spindle.

2. A machine tool according to claim 1 characterized in that a base (46) of the spindle carrier is pivotally mounted on the frame and in that the spindle head (72), the tool storage magazine (82) and the transfer means (86) are all mounted on said base (46) for pivotal movement therewith.

3. A machine tool according to claim 2, characterized in that the transfer means is an arm (86) mounted on the tool storage magazine (82).

## Patentansprüche

1. Werkzeugmaschine mit einem Gestell (20, 22, 24, 40), einem Spindelträger, der von dem Gestell abgestützt ist und dadurch in im wesentlichen waagerechten und senkrechten Ebenen verschoben werden kann, einem Spindelkopf (72), der von dem Spindelträger getragen und so ausgeführt ist, daß eine Spindel (76) in der im wesentlichen senkrechten Ebene gedreht werden kann, mit einer Einrichtung zum Kippen des Spindelkopfes (72), um ihn um eine im wesentlichen waagerechte Achse zu verschwenken, mit einem Werkzeugmagazin (82), welches so ausgeführt ist, daß wahlweise Werkzeughalter (78) für Überführung zur Spindel (76) dargeboten werden, und mit einer Einrichtung (86) zum Überführen eines Werkzeughalters (78) aus dem Magazin (82) zu der Spindel (76), dadurch gekennzeichnet, daß das Werkzeugmagazin (82) für gemeinsame Schwenkbewegung mit dem Spindelkopf (72) angeordnet ist, das Magazin (82) wirksam oder betätigbar ist, um einen Werkzeughalter (78) in einer Stellung darzubieten, in welcher die Längsachse des Werkzeughalters im wesentlichen parallel zur Achse der Spindel (76) liegt, und daß die Überführungseinrichtung (86) ebenfalls für gemeinsame Schwenkbewegung mit dem Magazin (82) und dem Spindelkopf (72) angeordnet ist, so daß für alle Schwenkstellungen des Spindelkopfes (72) Überführung des Werkzeughalters von der Überführungsstellung zum Spindelkopf ausgeführt wird durch Drehung der Überführungseinrichtung um eine Achse, die sich im wesentlichen parallel zu der Achse des Werkzeughalters und der Spindel erstreckt.

2. Werkzeugmaschine nach Anspruch 1, dadurch gekennzeichnet, daß ein Grundteil (46) des Spindelträgers an dem Gestell schwenkbar angeordnet ist, und daß der Spindelkopf (72), das Werkzeugmagazin (82) und die Überführungseinrichtung (86) alle an dem Grundteil (46) für Schwenkbewegung mit diesem angeordnet sind.

3. Werkzeugmaschine nach Anspruch 2, dadurch gekennzeichnet, daß die Überführungseinrichtung ein Arm (86) ist, der an dem Werkzeugmagazin (82) angebracht ist.

## Revendications

1. Une machine-outil comportant un châssis (20, 22, 24, 40), un support de broche porté par le châssis et déplaçable par celui-ci dans des plans sensiblement vertical et horizontal, une tête (72) porte-broche portée par ledit support de broche et agencée de façon à faire tourner une broche (76) dans ledit plan sensiblement vertical, des moyens pour incliner ladite tête (72) porte-broche de façon à le faire pivoter autour d'un axe sensiblement horizontal, un magasin (82) d'emmagasinage d'outils agencé pour présenter sélectivement des porte-outil (78) en vue de leur transfert à ladite broche (76), et des moyens (86) pour transférer un porte-outil (78) à partir dudit magasin (82) jusqu'à ladite broche (76), caractérisée en ce que le magasin (82) d'emmagasinage d'outils est monté de façon à effectuer un mouvement de pivotement commun avec la tête (72) porte-broche, en ce que ledit magasin (82) est actionnable pour présenter un porte-outil (78) à une position dans laquelle l'axe longitudinal du porte-outil est situé sensiblement parallèle à l'axe de la broche (76) et en ce que les moyens de transfert (86) sont également montés de façon à effectuer un mouvement de pivotement commun avec le magasin (82) et la tête (22) porte-broche de telle sorte que, pour toutes les positions de pivotement de la tête (72) porte-broche, le transfert du porte-outil de ladite position de transfert jusqu'à la tête porte-broche est effectué par rotation desdits moyens de transfert autour d'un axe s'étendant sensiblement parallèle à l'axe desdits porte-outil et broche.

2. Une machine-outil selon la revendication 1 caractérisée en ce qu'une semelle (46) du support de broche est montée pivotante sur le châssis et en ce que la tête (72) porte-outil, le magasin (82) d'emmagasinage d'outils et les moyens de transfert (86) sont tous montés sur ladite semelle (46) pour effectuer un mouvement de pivotement avec elle.

3. Une machine-outil selon la revendication 2, caractérisée en ce que les moyens de transfert sont constitués par un bras (86) monté sur le magasin (82) d'emmagasinage d'outils.

*Fig.1*

15° MAX. SPINDLE TILT
28" Z AXIS SPINDLE TRAVEL

*Fig.3*

*Fig.2*

0012553

# Fig. 4